Europäisches Patentamt

European Patent Office

Office européen des brevets

(19)

(11) Veröffentlichungsnummer : **0 402 657 B1**

## (12) EUROPÄISCHE PATENTSCHRIFT

(45) Veröffentlichungstag der Patentschrift :
**15.01.92 Patentblatt 92/03**

(51) Int. Cl.⁵ : **B01D 35/06,** B01D 29/21

(21) Anmeldenummer : **90109480.5**

(22) Anmeldetag : **18.05.90**

(54) Elektrisch leitfähiges Filter.

(30) Priorität : **06.06.89 DE 3918342**

(43) Veröffentlichungstag der Anmeldung :
**19.12.90 Patentblatt 90/51**

(45) Bekanntmachung des Hinweises auf die
Patenterteilung :
**15.01.92 Patentblatt 92/03**

(84) Benannte Vertragsstaaten :
**BE CH FR GB IT LI NL SE**

(56) Entgegenhaltungen :
**DE-A- 2 244 414
DE-A- 2 443 548
DE-A- 3 325 526**

(73) Patentinhaber : **KNECHT FILTERWERKE
GMBH
Pragstrasse 54
W-7000 Stuttgart 50 (DE)**

(72) Erfinder : **Quaas, Johannes
Schlüsseläckerstrasse 4
W-7170 Schwäbisch Hall 12 (DE)**
Erfinder : **Schwenk, Norbert
Creuzfelderstrasse 31
W-7114 Pfedelbach (DE)**

(74) Vertreter : **Pfusch, Volker, Dipl.-Ing.
MAHLE GMBH Patentabteilung Pragstrasse
26-46 Postfach 50 07 69
W-7000 Stuttgart 50 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 402 657 B1

## Beschreibung

Die Erfindung betrifft ein elektrisch leitfähiges Filter nach dem Oberbegriff des Patentanspruchs 1.

Derartige Filter sind aus DE-C-3325526 bekannt. Um eine elektrische Aufladung aus der leitfähigen Filtermaterialoberfläche über die Einfassung des Filtermaterials hinaus ableiten zu können, sind dort das leitfähige Filterbahnmaterial kontaktierende Federn vorgesehen, die geerdet werden können. In der Regel reicht ein solches Federelement oder doch zumindest wenige Federelemente aus, um zick-zack-förmig gefaltetes bahnenförmiges Filtermaterial ausreichend zu erden.

In Fällen, in denen das bahnenförmige Filtermaterial zur elektrostatischen Entladung lediglich mit einer metallischen Oberflächenschicht versehen ist auf einem nicht leitfähigen Grundmaterial, kann es beim zick-zack-förmigen Falten des Bahnenmaterials zu einem Aufbrechen der metallischen Oberflächenschicht an den Faltenkanten kommen. Liegt ein solcher Fall vor, muß praktisch jede Falte für sich über die in Längsrichtung des Filterbahnmaterials jeweils getrennten leitfähigen Oberflächenbereiche geerdet sein.

Für eine solche Erdung einer jeden einzelnen Falte eine wirksame und wirtschaftlich kostengünstig herstellbare lösung zu finden, ist die Aufgabe der vorliegenden Erfindung.

Gelöst wird diese Aufgabe durch Ausführungen des Filters bzw. des Filtermaterials nach den kennzeichnenden Merkmalen des Anspruchs 1 oder 3.

Eine praktische lösung nach den Merkmalen der Ansprüche 3 ff. könnte beispielsweise so aussehen, daß längs der Filterbahn, bevorzugt in der Nähe der Filterbahnlängskanten biegsame, insbesondere bruchfeste, Metalldrähte oder Streifen mit einem leitfähigen dehnfähigen und bruchfesten Kleber auf das Filterbahnmaterial aufgebracht sind. Das Aufbringen erfolgt dabei zweckmäßigerweise bereits vor dem zick-zack-förmigen Falten des Filterbahnmaterials.

Eine lösung, bei der das Zusatzmaterial erst auf die bereits gefaltete Filterbahn aufgebracht wird, gibt Anspruch 5 an. Als derartiges Zusatzmaterial bietet sich eine leitfähige Zugfeder an, wie sie Gegenstand des Anspruchs 6 ist.

Eine Zugfeder nach Anspruch 6 läßt sich, wenn die Federwicklungen in längsrichtung sehr eng aneinanderliegen, recht einfach auf die Stirnseiten der Falten des Filterbahnmaterials aufklemmen. Da jede zwischen den Faltkanten liegende Oberfläche einer Falte durch das Material der Zugfeder federnd und damit leitend kontaktiert wird, ist eine elektrostatische Ableitung über die Zugfeder hinweg recht einfach möglich.

Ausführungsbeispiele sind in der Zeichnung dargestellt. Es zeigen

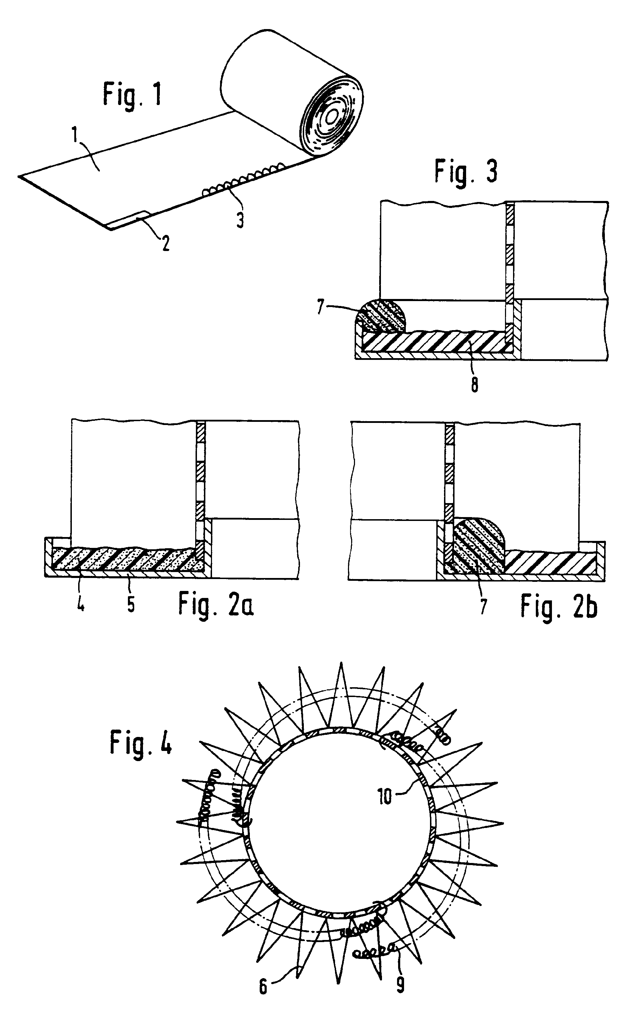

Fig. 1     einbahnförmiges Filtermaterial mit durch Zusatzmaterial leitfähig ausgebildeten Längskantenbereichen,

Fig. 2a     einen Schnitt durch den Endbereich einer Filterpatrone mit leitfähigem Dichtungsmaterial,

Fig. 2b     eine Ausführung wie in Fig. 2a, bei der lediglich eine dünne Schicht leitfähiges Dichtungsmaterial vorgesehen ist, während der Rest des Dichtungsmateriales nicht leitfähig ist,

Fig. 3     eine Ausbildung wie nach Fig. 2b, bei der das elektrisch leitfähige Dichtungsmaterial ebenfalls nur lokal, jedoch an einer anderen Stelle aufgebracht ist

Fig. 4     eine Draufsicht auf das stirnseitige Ende einer Filterpatrone mit eingelegten leitfähigen Zugfedern

Das zick-zack-förmig zu faltende bahnenförmige Filtermaterial 1 kann an seinen Längsrändern mit einem aufgewalzten elektrisch leitfähigen Weich-Metallband 2 oder einer Metallfaden3-Besäumung versehen sein. Diese auf die Längskante aufgebrachten Materialien besitzen einen solchen Aufbau, daß sie beim Falten des Filtermaterials nicht brechen und daher eine über den gesamten Faltenumfang lückenlos verlaufende elektrische Leitfähigkeit gewährleisten. Bei Verwendung eines solchen Filtermaterials reicht es dann aus, lediglich einzelne Falten elektrisch zu erden, da die elektrische Leitfähigkeit der Falten untereinander gegeben ist.

Eine über sämtliche Falten sichergestellte durchgehende elektrische Leitung läßt sich alternativ auch durch die Verwendung eines elektrisch leitfähigen Dichtmaterials 4 erzielen. Dabei kommt es dann lediglich darauf an, daß dieses Dichtmaterial 4 gleichzeitig den elektrisch leitfähigen Rahmen 5 des Filters und die einzelnen Falten 6 gemeinsam durchlaufend kontaktiert.

Um relativ teures leitfähiges Dichtmaterial in möglichst geringer Menge benutzen zu können, reicht es aus, dieses spezielle Dichtmaterial nur in einer relativ dünnen Schicht so aufzubringen, daß über den gesamten Patronenumfang die einzelnen Falten leitend mit dem Rahmen 5 verbunden sind. Diese dünne Schicht kann eine Art Strang 7 sein, der an den Falten einer Filterpatrone radial innen oder außen angebracht sein kann. An das leitfähige Dichtungsmaterial schließt sich in diesen Fällen nicht leitfähiges Dichtungsmaterial 8 jeweils an.

Die elektrisch leitende Kontaktierung der einzelnen Falten kann darüber hinaus durch elektrisch leitfähige Zugfedern erzielt werden, die auf die Stirnseiten der einzelnen Falten 6 leitfähig aufgeklemmt sind und jeweils an einer Stelle mit einem elektrisch leitfähigen Teil 10 der Filterpatrone verbunden sind. Anstelle mehrerer Zugfedern 9 kann eine einzige ausreichend sein, wenn sie sich nur auf der einen Stirnseite des Filterelementes über alle Faltenstirnseiten erstreckt.

**Patentansprüche**

1. Elektrisch leitfähiges Filter mit einem zick-zack-förmig gefalteten bahnförmigen Filtermaterial, das auf zumindest einer,Seite eine elektrisch leitfähige Oberflächenschicht auf einem nicht leitfähigen Grundmaterial aufweist und das an seinen Faltenstirnseiten in einem elektrisch leitfäfhigen Rahmen (5) über Dichtmaterial gefaßt ist, dadurch **gekennzeichnet,** daß an zumindest einer Faltenstirnseite das Dichtmaterial (4) elektrisch leitfähig ist.

2. Filter nach Anspruch 1, dadurch **gekennzeichnet,** daß das elektrisch leitfähige Dichtmaterial lediglich eine linienförmige den Rahmen (5) und zumindest einen Bereich jeder Falte (6) verbindende Schicht (7) ist, während sich hieran elektrisch nichtleitendes Dichtmaterial (8) anschließt.

3. Filter nach dem Oberbegriff des Anspruchs 1, dadurch **gekennzeichnet,** daß das Filtermaterial (1) in seiner Bahnenlängsrichtung mit einem die leitfähige Oberflächenschicht kontaktierenden linien- oder streifenförmigen biegsamen leitfähigen Zusatzmaterial (2, 3, 9) leitfähig verhunden ist.

4. Filter nach Anspruch 3, dadurch **gekennzeichnet,** daß das Zusatzmaterial (2, 3) auf der noch ungefalteten Filtermaterialbahn (1) aufgebracht ist.

5. Filter nach Anspruch 3, dadurch **gekennzeichnet,** daß das linien- oder streifenförmige Zusatzmaterial mit in dessen Längsrichtung federnd bzw. elastisch wirkenden Elementen versehen ist oder aus solchen zusammengesetzt ist, zwischen denen die einzelnen Falten einklemmbar sind bzw. zwischen welchen diese Elemente entsprechend einklemmbar sind.

6. Filter nach einem der Ansprüche 3 oder 5, dadurch **gekennzeichnet,** daß das Zusatzmaterial eine Zugfeder (9) ist, die an einer Stirnseite der Falten so auf die einzelnen Falten aufklemmbar ist, daß eine an den Faltenkanten aufgebrochene leitfähige Oberflächenschicht in Längsrichtung des Filterbahnmaterials (1) elektrisch leitend verbunden ist.

**Claims**

1. Electrically conductive filter with a web-form filter material which is folded in a zig-zag manner, has an electrically conductive surface layer on at least one side on a non-conductive base material and, on its fold end faces, is set in an electrically conductive frame (5) via sealing material, characterised in that the sealing material (4) is electrically conductive at least at one fold end face.

2. Filter according to claim 1, characterised in that the electrically conductive sealing material is merely a linear layer (7) connecting the frame (5) and at least a region of each fold (6) while electrically non-conductive sealing material (8) is attached hereto.

3. Filter according to the preamble of claim 1, characterised in that the filter material (1) is conductively connected in its longitudinal web direction to a linear or strip-shaped flexible conductive additional material (2, 3, 9) contacting the conductive surface layer.

4. Filter according to claim 3, characterised in that the additional material (2, 3) is applied on the still unfolded web of filter material (1).

5. Filter according to claim 3, characterised in that the linear or strip-shaped additional material is provided with elements which act resiliently or elastically in the longitudinal direction thereof or is composed of such elements, between which the individual folds can be gripped or between which these elements can accordingly be gripped.

6. Filter according to one of claims 3 or 5, characterised in that the additional material is a tension spring (9) which can be clamped onto the individual folds at one end face of the folds such that a conductive surface layer broken open at the fold edges is connected electrically conductively in the longitudinal direction of the filter web material (1).

**Revendications**

1. Filtre électriquement conducteur, comprenant une matière filtrante en forme de bande pliée en zigzag laquelle est munie au moins sur l'une des faces d'une couche superficielle électriquement conductrice appliquée sur un matériau de base non conducteur et dont les faces frontales des plis sont montées par l'intermédiaire d'un matériau d'étancheité dans un cadre (5) électriquement conducteur, **caractérisé en ce** que le matériau d'étancheité (4) est électriquement conducteur sur au moins l'une des faces frontales des plis.

2. Filtre selon la revendication 1, caractérisé en ce que le matériau d'étanchéité électriquement conducteur n'est qu'une couche (7) linéaire reliant le cadre (5) et au moins une section de chaque plis (6), à laquelle fait suite du matériau d'étancheité électriquement non conducteur (8).

3. Filtre selon le préambule de la revendication 1, caractérisé en ce que la matière filtrante (1) est reliée, dans le sens longitudinale de ses bandes, à un matériau supplémentaire (2, 3, 9) souple et conducteur, linéaire ou en forme de bande, qui établit le contact électrique avec la couche superficielle conductrice.

4. Filtre selon la revendication 3, caractérisé en ce que le matériau supplémentaire (2, 3) est appliqué sur la bande de matière filtrante (1) pas encore pliée.

5. Filtre selon la revendication 3, caractérisé en ce que le matériau supplémentaire linéaire ou en forme de bande est muni d'éléments agissant à la manière d'un ressort et respectivement élastiquement dans la direction de son extension longitudinale ou qu'il est constitué de tels éléments entre lesquels peuvent être serrés les différents plis et respectivement entre lesquels, ces éléments peuvent être serrés de manière analogue.

6. Filtre selon l'une des revendications 3 ou 5, caractérisé en ce que le matériau supplémentaire est un ressort de traction (9) qui peut être coincé sur l'une des faces frontales des plis de telle façon qu'une couche superficielle conductrice rompue aux bords des plis est reliée de manière électriquement conductrice dans le sens longitudinal de la matière filtrante (1) en bande.

Fig. 1

Fig. 3

Fig. 2a

Fig. 2b

Fig. 4